# EUROPEAN PATENT APPLICATION

(11) **EP 0 800 778 A2**
(43) Date of publication of application: **15.10.1997**
(21) Application number: 97500043.1
(22) Date of filing: 27.02.1997
(51) Int. Cl.: A43B 13/38, A43B 3/12

(54) **Footwear insole manufacturing procedure**

(30) Priority: 09.04.1996 ES 9600809
(71) Applicant: Huertas Serna, Elisa Maria, 03203 Elche (Alicante) (ES)
(72) Inventor: Huertas Serna, Elisa Maria, 03203 Elche (Alicante) (ES)
(74) Representative: Perez Bonal, Bernardo

(57) **Abstract**

Insoles such as are constructed on the basis of binding a cork granulate in an adhesive rubber mass or similar conventional product involving the consecutive arrangement of two molds, the first of which is used for forming the shoe cloth or split, the second, in two consecutive stages, allowing for the insertion of the vamp, made of the above material, in the granulate mass, with a slant in the order of 45°.

## Description

### OBJECT OF THE INVENTION

The invention proposed herein consists in a procedure for manufacturing footwear insoles of the type based on the binding of a cork granulate in an adhesive rubber mass or similar conventional product.

This procedure is characteristic in its consecutive arrangement of two molds, the first of which is used for forming the shoe cloth or split, and the second, in two consecutive stages, for the inclusion of the vamp, made of said cloth or split, within the granulate mass.

A formed insole piece is thus obtained which is surrounded by the split or cloth along the foot sole supporting area and is further enclosed externally by part of the vamp, save for the shoe sole attachment area.

### BACKGROUND OF THE INVENTION

Multiple procedures exist for manufacturing footwear insoles of the type defining an undulating surface and upper extending edges for accommodating the wearer's foot sole.

The applicant is unaware of the existence of manufacturing procedures allowing the insertion of the vamp during the granulate moulding in a way that the vamp covers the shoe's cloth or split.

### DESCRIPTION OF THE INVENTION

The invention which is the object of the present specification refers to a specific footwear insole manufacturing procedure designed to obtain said insoles formed with an undulating surface and upwardly extending edges for accommodating the foot sole, of the type based on the binding of a cork granulate or similar material in an adhesive mass of natural rubber, butadiene or similar plastic byproduct, within conventional parameters of said binding procedure.

This inventive procedure is characteristic in its consecutive arrangement of two molds, the first of which is used for forming the cloth or split which serves to cover the upper side of the shoe sole.

Toward this end, the mold is arranged in inverted position in regard to the position in which the insole is to be used, in a manner that on the bottom of the mold - undulated to the shape of the insole's upper side and provided with the recesses for forming the edge crest - is laid the cloth or split which comes in contact with the user's skin or sock; subsequently, the product is moulded at low temperature.

This moulded part is then conveyed to the second mold, wherein, at a normal temperature and within the same arrangement, part of the cork granulate and binder is deposited over the formed part in sufficient amount to enable, in this first stage of the second moulding and at the normal moulding temperature, insertion of both ends of the vamp in the hot assembly at an approximately 45° insertion angle, irrespective of the fact that the edges may be straight or slightly curved in either direction.

A portion of the oblique edge reaching the edge of the external zone of the mold thus remains devoid of granulate and binder filling, said filling being performed in a second consecutive stage corresponding to the bonding of a subsequent zone of the formed insole to the shoe sole.

This procedure allows for the insertion of the vamp obviously fabricated from cloth or split, including the double ended type fastened at the ends thereof by any conventional means - in the granulate mass at a depth and in a manner that removal is completely impossible except in the event of destruction or crumbling of the insole.

Thus, a formed insole is obtained that is surrounded by the split or cloth along the foot plant supporting area and is covered externally by the vamp portions which, on fastening the shoe, completely protect the sides of the cork insole, prevent damage to the insole and provide the appearance of formal footwear.

### DESCRIPTION OF THE DRAWINGS

In order to complement the description set forth and enable a better and easier understanding of the characteristics of the invention, a set of drawings is attached to this description, being an integral part thereof, wherein the following is shown in an illustrative, non-limiting character:

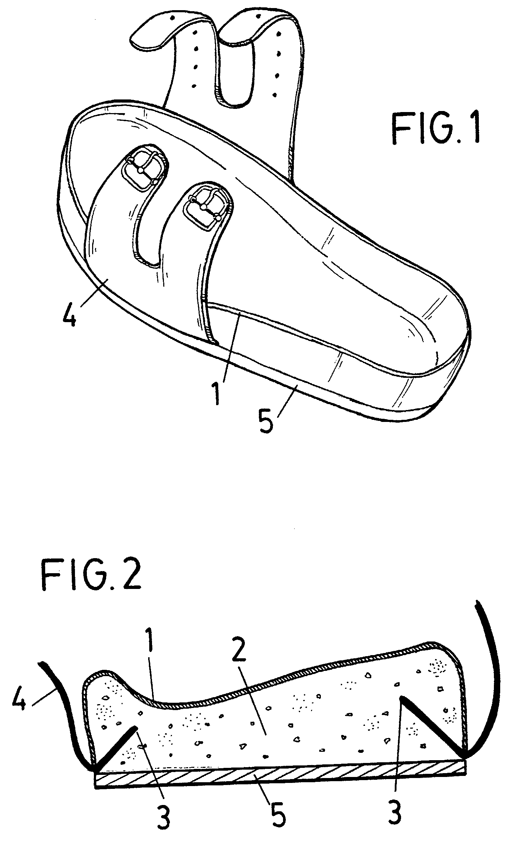

Figure 1 is a perspective view of a shoe fabricated according to this procedure of the invention.

Figure 2 is a cross-section of the shoe, showing the arrangement of the vamp in the insole mass.

### PREFERRED EMBODIMENT OF THE INVENTION

In the light of the above description, the present invention relates to a footwear insole manufacturing procedure for obtaining formed insoles having an uneven surface and protruding edges, such as are fabricated by binding a cork granulate in an adhesive mass using conventional binding procedure parameters, essentially characterized in that it comprises two consecutive molds and in that the second moulding is performed in two stages.

The first moulding forms the cloth or split (1) which covers the upper side of the shoe's insole, the mold being inverted in respect to the position on which the insole is to be worn, and a cloth or split is placed in the bottom of the mold to subsequently mould the product at low temperature.

In the second mold and at normal temperature, part of the cork granulate and binder (2) is deposited over this formed part in sufficient quantity to enable the insertion of both ends (3) of the vamp (4) in the hot assembly in a way that they become immersed in the mixture and press it against the sides of the mold, approximately at a 45° angle.

The second consecutive stage involves filling the remaining oblique edge portion with cork and binder up to the edge of the external area of the mold, which defines the limit of the shoe sole, the vamp being inserted to a depth and in an arrangement whereby removal from the formed insole is absolutely impossible, said portion being surrounded by the split or cloth in the foot sole supporting area, externally covered by the vamp portions except for the sole (5) bonding area, the sides of the insole being thus protected.

This description need not be made more extensive in the understanding that any expert on the subject will have sufficient information to understand the scope of the invention and the advantages deriving therefrom, and to reproduce it.

It should be understood that, provided the essence of the invention is not altered, the materials, size and arrangement of the elements are liable to variation.

The terms used in the description and the sense thereof should at all times be interpreted in a non-limiting manner.

## Claims

1. Footwear insole manufacturing procedure for obtaining formed insoles having an uneven surface and protruding edges, such as are fabricated by binding a cork granulate in an adhesive mass using conventional binding procedure parameters, essentially characterized in that two consecutive molds are provided and in that the second moulding is performed in two stages.

2. Footwear insole manufacturing procedure, according to the previous claim, characterized in that the first moulding forms the cloth or split which covers the upper side of the shoe's insole, the mold being inverted in respect to the position in which the insole is to be worn, and the cloth or split being placed in the bottom of the mold to subsequently mould the product at low temperature.

3. Footwear insole manufacturing procedure, according to the first claim, characterized in that in the second mold, at normal temperature conditions, part of the cork granulate and binder is deposited over this formed part in sufficient quantity to enable the insertion of both ends of the vamp in the hot assembly in a way that they become immersed in the mixture and press it against the sides of the mold, approximately at a 45° angle.

4. Footwear insole manufacturing procedure, according to the first and third claims, characterized in that the second consecutive stage of the second moulding involves filling the remaining oblique edge portion with cork and binder up to the edge of the external area of the mold, which defines the limit of the shoe sole, the vamp being inserted to a depth and in an arrangement whereby removal from the formed insole is absolutely impossible, said portion being surrounded by the split or cloth in the foot sole supporting area, externally covered by the vamp portions except for the sole bonding area, the sides of the insole being thus protected.
